(19) Europäisches Patentamt
European Patent Office
Office européen des brevets

(11) **EP 3 211 841 B1**

(12) **FASCICULE DE BREVET EUROPEEN**

(45) Date de publication et mention
de la délivrance du brevet:
**26.06.2019 Bulletin 2019/26**

(51) Int Cl.:
*H04L 12/761* (2013.01)   *H04L 12/721* (2013.01)
*H04W 40/26* (2009.01)

(21) Numéro de dépôt: **17157086.4**

(22) Date de dépôt: **21.02.2017**

(54) **PROCÉDÉ POUR DÉCIDER DE RELAYER PAR DIFFUSION UNE COPIE D'UNE REQUÊTE DE DÉCOUVERTE DE ROUTE DANS UN RÉSEAU DE COMMUNICATION**

VERFAHREN ZUM ENTSCHEIDEN ÜBER DIE WEITERLEITUNG EINER KOPIE EINER WEGERMITTLUNGSANFRAGE DURCH ÜBERTRAGUNG IN EINEM KOMMUNIKATIONSNETZ

METHOD FOR DECIDING TO RELAY A COPY OF A ROUTE DISCOVERY REQUEST IN A COMMUNICATION NETWORK BY BROADCAST

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.02.2016 FR 1651493**

(43) Date de publication de la demande:
**30.08.2017 Bulletin 2017/35**

(73) Titulaire: **Sagemcom Energy & Telecom SAS 92500 Rueil-Malmaison (FR)**

(72) Inventeurs:
• **ROTER, Ziv**
  **92500 Rueil Malmaison (FR)**
• **SERGI, Jérémie**
  **92500 Rueil Malmaison (FR)**

(74) Mandataire: **Cabinet Le Guen Maillet
3, impasse de la Vigie
CS 71840
35418 Saint-Malo Cedex (FR)**

(56) Documents cités:
**WO-A1-2010/013154   US-A1- 2011 176 416
US-B1- 9 008 073**

## Description

La présente invention concerne le relais de copies de requête de découverte de route afin de découvrir au moins une route depuis un dispositif noeud source jusqu'à un dispositif noeud destination dans un réseau de communication (de données) comportant d'autres dispositifs noeuds pouvant agir comme relais entre le dispositif noeud source et le dispositif noeud destination.

Pour découvrir une route appropriée dans un réseau de communication (de données) depuis un dispositif noeud source jusqu'à un dispositif noeud destination, il est connu que le dispositif noeud source diffuse (« broadcast » en anglais) une requête de découverte de route. Cette requête de découverte de route est reçue par chaque dispositif noeud dans le voisinage réseau dudit dispositif noeud source, et qui relaie, par diffusion, ladite copie de la requête si ledit dispositif noeud en question n'est pas le dispositif noeud destination. Par diffusion de proche en proche, plusieurs copies de la requête de découverte de route sont typiquement reçues par le dispositif noeud destination, chacune de ces copies ayant suivi une route différente dans le réseau de communication. Chaque dispositif noeud peut toutefois décider de ne pas relayer une copie de la requête de découverte de route, lorsqu'un ou plusieurs critères ne sont pas remplis. Notamment, avant de décider de relayer ladite copie de la requête, le dispositif noeud en question vérifie typiquement si ladite copie de la requête comporte une information représentative d'un coût de route, depuis le dispositif noeud source jusqu'audit dispositif noeud en question, qui est meilleur que le coût de route représenté par une information contenue dans une autre copie de ladite requête de découverte de route précédemment reçue par ledit dispositif noeud en question. En d'autres termes, le dispositif noeud en question relaie, par diffusion, ladite copie de la requête si ladite copie concerne une route qui a suivi, depuis le dispositif noeud source jusqu'audit dispositif noeud en question, un trajet de plus faible coût que toute autre copie de ladite requête précédemment reçue par ledit dispositif noeud en question (donc pour la même découverte de route). Lorsque ledit dispositif noeud en question décide de relayer, par diffusion, ladite copie de la requête, ledit dispositif noeud en question met à jour l'information de coût de route contenue dans ladite copie de la requête, de manière à prendre en compte que ladite copie de la requête est passée par ledit dispositif noeud en question. Ainsi, selon un tel principe, plusieurs copies de la requête de découverte de route parviennent typiquement au dispositif noeud destination, chacune comportant une information de coût de route que ladite copie a suivi pour être propagée depuis ledit dispositif noeud source jusqu'audit dispositif noeud destination. Le trajet emprunté par noeud destination. Le trajet emprunté par la copie de ladite requête de découverte de route associée au meilleur coût de route est ensuite sélectionné pour permettre au dispositif noeud source de transmettre des données au dispositif noeud destination.

Ce principe se retrouve dans des réseaux de communication où des dispositifs noeuds agissent comme relais pour permettre d'étendre la portée des communications. C'est notamment le cas dans certaines technologies de réseaux d'alimentation électrique de type AMM (« Automated Meter Management » en anglais) qui s'appuient sur des communications par courants porteurs en ligne PLC (« PowerLine Communications » en anglais) pour collecter, auprès de compteurs électriques intelligents (« smart electricity meters » en anglais), des données de relevés de consommation énergétique d'installations électriques que lesdits compteurs électriques intelligents sont respectivement en charge de surveiller. C'est notamment le cas dans le cadre de la technologie G3-PLC (marque déposée). Ce principe s'applique aussi dans d'autres types de réseaux de communication, qu'ils soient filaires (« wired » en anglais) ou sans-fil (« wireless » en anglais) dès qu'ils présentent un maillage impliquant qu'il existe plusieurs routes pour permettre à deux dispositifs noeuds de communiquer.

Ce principe a toutefois l'inconvénient d'entraîner un grand nombre de transmissions dans le réseau de communication à cause des diffusions des diverses copies de chaque requête de découverte de route, ce qui signifie une grande consommation de bande passante pour ce faire et/ou, lorsque le réseau de communication ne dispose pas de mécanisme d'évitement de collision (« collision avoidance » en anglais), un risque important de collision de signaux. Il est souhaitable de pallier cet inconvénient de l'état de la technique.

Il est connu le brevet US 9,008,073 B1 qui divulgue un réseau de communication PLC dans lequel plusieurs routes existent typiquement entre un noeud source et un noeud destination. Le noeud source transmet une requête RREQ pour découvrir un chemin approprié entre le noeud source et le noeud destination. Cette requête est propagée par diffusion (« broadcast » en anglais) depuis le noeud source jusqu'au noeud destination grâce à des noeuds intermédiaires. Au cours de la propagation, chaque noeud intermédiaire met à jour notamment un champ de coût de route, tenant compte du coût aller et du coût retour des liens ajoutés par ladite propagation. Un noeud intermédiaire qui reçoit une requête RREQ associée à un couple coût de route / liens faibles vérifie si ledit couple coût de route / liens faibles est significativement meilleur que celui associé à un autre exemplaire de la requête RREQ précédemment reçu et conservé en mémoire. Si tel est le cas, la requête RREQ nouvellement reçue fait office de nouvelle référence et est propagée ; sinon, elle est jetée.

La présente invention concerne un procédé pour décider de relayer par diffusion une copie d'une requête de découverte de route afin de découvrir au moins une route depuis un dispositif noeud source jusqu'à un dispositif noeud destination dans un réseau de communication comportant d'autres dispositifs noeuds pouvant agir comme relais entre le dispositif noeud source et le dispositif noeud destination. Le procédé est implémenté par au moins un dispositif noeud parmi lesdits autres dispositifs noeuds, de telle sorte que, sur réception de la copie de la requête de découverte de route, ledit dispositif noeud décide de relayer par diffusion ladite copie si la différence entre un coût de route associé à toute autre copie de ladite requête de découverte de route précédemment reçue par ledit dispositif noeud et un coût de route associé à ladite copie

est supérieur à une valeur de seuil d'amélioration de coût de route. De plus, ledit dispositif noeud définit dynamiquement la valeur dudit seuil d'amélioration de coût de route en fonction d'une quantité de dispositifs noeuds présents dans le voisinage réseau dudit dispositif noeud, de telle sorte que, en considérant une quantité X de dispositifs noeuds qui seraient présents dans le voisinage réseau dudit dispositif noeud qui est supérieure à une quantité Y de dispositifs noeuds qui seraient présents dans le voisinage réseau dudit dispositif noeud, la valeur dudit seuil pour ladite quantité X est au moins aussi élevée que la valeur dudit seuil pour ladite quantité Y. Ainsi, grâce à l'utilisation dudit seuil, une copie de la requête de découverte de route est relayée par diffusion que si ladite copie apporte une amélioration de coût jugée suffisamment significative. Plus le voisinage réseau dudit dispositif noeud comporte un grand nombre de dispositifs noeuds, plus la probabilité qu'il existe des routes alternatives ayant des coûts de route proches, c'est-à-dire ayant des performances relativement similaires, est élevée. Il n'est alors pas nécessaire de relayer par diffusion toutes les copies de la requête de découverte de route qui pourraient être reçues par ledit dispositif noeud, ce qui entraîne que la route optimale depuis le dispositif noeud source et le dispositif noeud destination puisse ne pas être découverte. Un compromis entre performances des routes découvertes au final et nombre de diffusions nécessaires pour découvrir des routes adéquates est alors préféré, afin de limiter la consommation de bande passante pour ce faire et/ou, lorsque le réseau de communication ne dispose pas de mécanisme d'évitement de collision, de limiter le risque de collision de signaux.

Selon un mode de réalisation particulier, ledit dispositif noeud définit dynamiquement la valeur dudit seuil d'amélioration de coût de route de la manière suivante :

$$ V = K * {}^{n}/_{NT_{size}} $$

où :

- *K* est un coefficient multiplicateur positif non nul prédéfini ;
- *n* représente un nombre d'entrées d'une table des voisins dudit dispositif noeud qui ont été rafraichies plus récemment qu'un délai prédéfini ; et
- $NT_{size}$ représente la taille totale de la table des voisins dudit dispositif noeud.

Selon un mode de réalisation particulier, sur décision de relayer par diffusion ladite copie, ledit dispositif noeud effectue les étapes suivantes : préparer une copie à diffuser de la requête de découverte de route ; enregistrer une information représentative de l'instant auquel ladite copie à diffuser a été préparée par le dispositif noeud ; et placer ladite copie à diffuser en file d'attente en couche MAC (« Médium Access Control » en anglais) dudit dispositif noeud. De plus, ledit dispositif noeud supprime de la file d'attente de la couche MAC dudit dispositif noeud toute copie de requête de découverte de route qui a été préparée depuis un temps supérieur à un seuil prédéfini.

Selon un mode de réalisation particulier, sur décision de relayer par diffusion ladite copie, ledit dispositif noeud effectue les étapes suivantes : préparer une copie à diffuser de la requête de découverte de route ; et placer ladite copie à diffuser en file d'attente en couche MAC dudit dispositif noeud. De plus, avant de placer ladite copie à diffuser en file d'attente en couche MAC dudit dispositif noeud, ledit dispositif noeud vérifie s'il y a une autre copie de la requête de découverte de route en attente de diffusion en file d'attente de la couche MAC dudit dispositif noeud, et si tel est le cas, ledit dispositif noeud supprime cette autre copie de la requête de découverte de route qui se trouve en file d'attente de la couche MAC dudit dispositif noeud.

Selon un mode de réalisation particulier, le dispositif noeud décide de relayer effectivement par diffusion ladite copie de la requête de découverte de route si le trajet par lequel ladite copie est parvenue audit dispositif noeud comporte un nombre de liens inter-dispositifs noeuds jugés de faible performance qui soit inférieur à un seuil prédéfini.

Selon un mode de réalisation particulier, le dispositif noeud décide de relayer effectivement par diffusion ladite copie de la requête de découverte de route si le trajet par lequel ladite copie est parvenue au dispositif noeud comporte un nombre de sauts inférieur à un seuil prédéfini.

Selon un mode de réalisation particulier, ladite copie de la requête de découverte de route inclut une information représentative d'un instant auquel la requête de découverte de route a été initialement diffusée par le dispositif noeud source, et ledit dispositif noeud décide de relayer effectivement par diffusion ladite copie de la requête de découverte de route si ladite copie a été initialement diffusée par le dispositif noeud source depuis un temps inférieur à un seuil prédéfini.

Selon un mode de réalisation particulier, le réseau de communication est un réseau de communication par courants porteurs en ligne qui est implémenté sur un réseau d'alimentation électrique, et les dispositifs noeuds du réseau de communication sont des compteurs électriques intelligents en charge de relever des consommations énergétiques d'installations électriques respectives alimentées par ledit réseau d'alimentation électrique.

L'invention concerne également un dispositif noeud configuré pour décider de relayer par diffusion une copie d'une requête de découverte de route afin de découvrir au moins une route depuis un dispositif noeud source jusqu'à un dispositif noeud destination dans un réseau de communication comportant d'autres dispositifs noeuds pouvant agir comme relais entre le dispositif noeud source et le dispositif noeud destination. Ledit dispositif noeud est tel que, sur réception de la copie de la requête de découverte de route, ledit dispositif noeud est configuré pour décider de relayer par diffusion ladite copie si la différence entre un coût de route associé à toute autre copie de ladite requête de découverte de route précédemment reçue par ledit dispositif noeud et un coût de route associé à ladite copie est supérieure à une valeur de seuil d'amélioration de coût de route. De plus, ledit dispositif noeud est configuré pour définir dynamiquement la valeur dudit seuil d'amélioration de coût de route en fonction d'une quantité de dispositifs noeuds présents dans le voisinage réseau dudit dispositif noeud, de telle sorte que, en considérant une quantité X de dispositifs noeuds qui seraient présents dans le voisinage réseau dudit dispositif noeud qui est supérieure à une quantité Y de dispositifs noeuds qui seraient présents dans le voisinage réseau dudit dispositif noeud, la valeur dudit seuil pour ladite quantité X est au moins aussi élevée que la valeur dudit seuil pour ladite quantité Y.

L'invention concerne également un programme d'ordinateur, qui peut être stocké sur un support et/ou téléchargé d'un réseau de communication, afin d'être lu par un processeur. Ce programme d'ordinateur comprend des instructions pour implémenter le procédé mentionné ci-dessus, lorsque ledit programme est exécuté par le processeur. L'invention concerne également des moyens de stockage comprenant un tel programme d'ordinateur.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

- la Fig. 1 illustre schématiquement un réseau de communication dans lequel l'invention peut être implémentée ;
- la Fig. 2 illustre schématiquement un exemple d'architecture matérielle d'un dispositif noeud du réseau de communication ;
- la Fig. 3 illustre schématiquement un algorithme, exécuté par au moins un dispositif noeud du réseau de communication, pour définir une valeur de seuil d'amélioration de coût de route, à utiliser pour décider de relayer ou non une requête de découverte de route entre deux dispositifs noeuds du réseau de communication ; et
- la Fig. 4 illustre schématiquement un algorithme, exécuté par chaque dispositif noeud du réseau de communication, pour décider de relayer ou non des copies de requêtes de découverte de route entre dispositifs noeuds du réseau de communication.

La description qui suit détaille la présente invention dans le cadre d'un réseau de communication par courants porteurs en ligne qui est implémenté sur un réseau d'alimentation électrique, afin de mettre en oeuvre des services de type AMM. Il convient toutefois de noter que la présente invention s'applique à tout réseau de communication (de données) dans lequel des dispositifs noeuds servent de relais, par diffusion (« broadcast » en anglais), à des requêtes de découverte de route afin de permettre de sélectionner quelle route utiliser par un dispositif noeud source pour transmettre des données à un dispositif noeud destination.

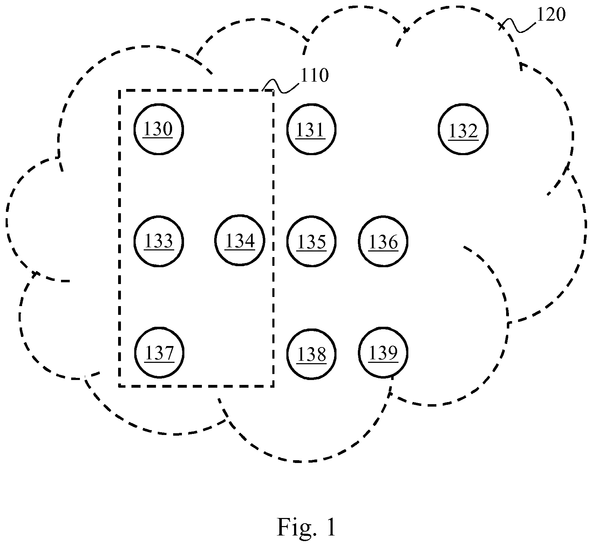

La **Fig. 1** illustre schématiquement un réseau de communication 120 dans lequel l'invention peut être implémentée. Le réseau de communication 120 comporte une pluralité de dispositifs noeuds 130, 131, 132, 133, 134, 135, 136, 137, 138, 139. A chaque dispositif noeud du réseau de communication 120 est associé un voisinage réseau. Sur la Fig. 1, le dispositif noeud 133 est associé à un voisinage réseau 110 englobant les dispositifs noeuds 130, 134 et 137. En effet, dans le réseau de communication 120, un signal ou un message diffusé par un dispositif noeud (tel que le dispositif noeud 133) n'est en général pas visible en tout point dudit réseau de communication. Chaque dispositif noeud émetteur de signaux ou de messages dispose alors d'un voisinage réseau, c'est-à-dire d'un sous-ensemble dudit réseau de communication 120 dans lequel tout dispositif noeud peut recevoir de manière intelligible lesdits signaux ou messages directement en provenance du dispositif noeud ayant diffusé lesdits signaux ou messages. Le voisinage réseau correspond à la portée des signaux émis, en fonction de paramètres prédéterminés de transmission (e.g. puissance, schéma de modulation et de codage, topologie réseau...) du dispositif noeud à la source desdits signaux et aussi potentiellement en fonction de caractéristiques du canal de communication (atténuation, bruit, impédance...).

De manière à augmenter la portée des communications dans le réseau de communication 120, des dispositifs noeuds jouent le rôle de relais pour permettre d'établir des communications depuis un dispositif noeud source vers un dispositif noeud destination qui ne fait pas partie du voisinage réseau dudit dispositif source. Certaines communications entre dispositifs noeuds peuvent nécessiter plusieurs relais successifs. De manière à permettre d'établir des communications depuis le dispositif noeud source vers le dispositif noeud destination, il est nécessaire de découvrir quelle route, au sein du réseau de communication 120, doivent emprunter les données concernées pour parvenir jusqu'au dispositif noeud destination. Pour ce faire, le dispositif noeud source diffuse une requête de découverte de route. Une copie de cette requête de découverte de route est reçue par au moins un dispositif noeud dans le voisinage réseau dudit dispositif noeud source, et qui relaie, par diffusion, ladite copie de la requête si ledit dispositif noeud n'est pas le dispositif noeud destination. Cette copie relayée est alors reçue par au moins un autre dispositif noeud dans le voisinage réseau dudit dispositif noeud ayant effectué le relais, cet autre dispositif noeud pouvant alors relayer ladite copie à son tour si ledit autre dispositif noeud n'est pas non plus le dispositif noeud destination. Par diffusion de proche en proche, plusieurs copies de la requête de découverte de route sont typiquement reçues par le dispositif noeud destination, chacune de ces copies ayant suivi une route différente dans le réseau de communication 120. Etant donné que chacune de ces copies a suivi une route différente, chacune de ces copies est associée à un coût de route qui lui est propre. La route suivie par la copie présentant le meilleur coût de route est alors sélectionnée pour transmettre des données depuis le dispositif noeud source jusqu'au dispositif noeud destination.

Selon un premier exemple, le coût de route est un nombre de sauts (« hops » en anglais) subis par la copie en question depuis le dispositif noeud source jusqu'au dispositif noeud destination. Cette définition du coût de route est notamment utilisée dans le protocole RIP (« Routing Information Protocol » en anglais, tel que défini dans les documents normatifs RFC 1058 et RFC 2453). Selon un second exemple, le coût de route est le résultat d'un calcul qui dépend de la bande passante des liens franchis, par la copie en question depuis le dispositif noeud source jusqu'au dispositif noeud destination. Cette définition du coût de route est notamment utilisée dans le protocole OSPF (« Open Shortest Path First » en anglais, tel que défini dans les documents normatifs RFC 2328 et RFC 2740). D'autres métriques peuvent être utilisées pour établir un coût de route, c'est-à-dire un coût de transit, depuis le dispositif noeud source jusqu'au dispositif noeud destination.

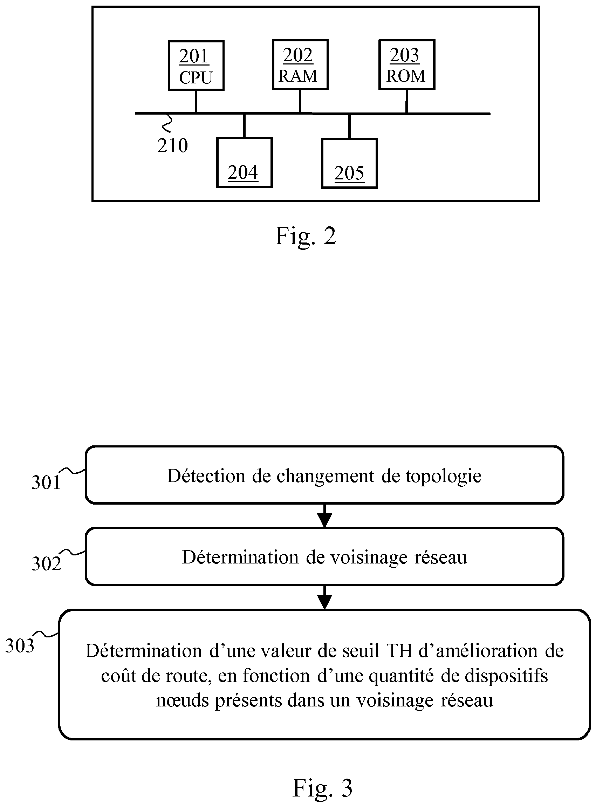

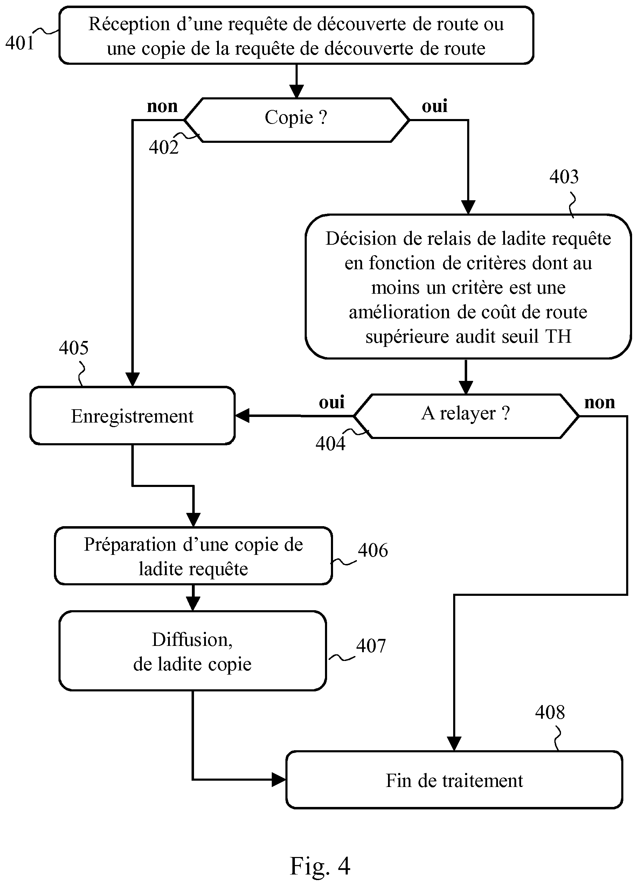

Chaque dispositif noeud apte à jouer le rôle de relais peut toutefois décider de ne pas relayer une ou plusieurs copies de la requête de découverte de route, lorsqu'un ou plusieurs critères ne sont pas remplis. Cet aspect est détaillé ci-après en relation avec la Fig. 4. Comme détaillé ci-après en relation avec la Fig. 3, un critère est plus particulièrement lié à un seuil TH d'amélioration de coût de route, qui est dynamiquement défini pour chaque dispositif noeud en fonction de son propre voisinage réseau.

De manière préférentielle, le réseau de communication 120 est plus particulièrement un réseau de communication par courants porteurs en ligne (« powerline communications (PLC) network » en anglais), qui est implémenté sur un réseau d'alimentation électrique. Les dispositifs noeuds du réseau de communication 120 sont alors typiquement des compteurs électriques intelligents, permettant de collecter à distance des données de relevés de consommation énergétique d'installations électriques (alimentées par ledit réseau d'alimentation électrique) dont lesdits compteurs électriques intelligents sont respectivement en charge de relever la consommation énergétique. On peut noter que les réseaux de communication par courants porteurs en ligne selon la technologie G3-PLC sont par exemple concernés.

La Fig. 2 illustre schématiquement un exemple d'architecture matérielle des dispositifs noeuds du réseau de communication 120. Considérons à titre illustratif que la Fig. 2 représente schématiquement l'architecture du dispositif noeud 133. Le dispositif noeud 133 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203 ; une unité de stockage 204 ou un lecteur de support de stockage, tel qu'un lecteur de cartes SD (« Secure Digital » en anglais) ou un disque dur HDD (« Hard Disk Drive » en anglais) ; une interface d'émission-réception (« transceiver interface » en anglais) 205 permettant au dispositif noeud 133 de communiquer avec les noeuds du réseau de communication 120 qui sont présents dans le voisinage réseau 110 dudit dispositif noeud 133.

Le processeur 201 est capable d'exécuter des instructions chargées dans la RAM 202 à partir de la ROM 203, d'une mémoire externe (non représentée), d'un support de stockage (tel qu'une carte SD), ou d'un réseau de communication (potentiellement autre que le réseau de communication 120). Lorsque le dispositif noeud 133 est mis sous tension, le processeur 201 est capable de lire de la RAM 202 des instructions et de les exécuter. Ces instructions forment un programme d'ordinateur causant la mise en oeuvre, par le processeur 201, de tout ou partie des algorithmes et étapes décrits ci-après.

Tout ou partie des algorithmes et étapes décrits ci-après peut être implémenté sous forme logicielle par exécution d'un ensemble d'instructions par une machine programmable, par exemple un processeur, un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais).

La Fig. 3 illustre schématiquement un algorithme, exécuté par au moins un dispositif noeud du réseau de communication 120, pour définir une valeur du seuil TH d'amélioration de coût de route, à utiliser par ledit dispositif noeud pour décider de relayer ou non une requête de découverte de route entre deux dispositifs noeuds du réseau de communication 120. Considérons à tire illustratif que l'algorithme de la Fig. 3 est mis en oeuvre par le dispositif noeud 134.

Dans une étape 301, le dispositif noeud 134 détecte un changement de topologie du réseau de communication 120. Un changement de topologie est détecté par un ou plusieurs dispositifs noeuds du réseau de communication 120 lorsqu'un changement survient dans les voisinages réseau respectifs desdits dispositifs noeuds (apparition d'un dispositif noeud dans lesdits voisinages réseau, ou disparition d'un dispositif noeud desdits voisinages réseau). Par définition, le voisinage réseau de chaque dispositif noeud ayant détecté le changement de topologie est modifié.

Dans une étape 302 suivante, le dispositif noeud 134 détermine le voisinage réseau dudit dispositif noeud 134 qui résulte du changement de topologie détecté. Dans le cadre de la technologie G3-PLC, le voisinage réseau du dispositif noeud 134 est reflété dans une table des voisins (« neighbour table » en anglais). La table des voisins est rafraichie à chaque fois qu'un dispositif noeud donné capte un message valide d'un autre dispositif noeud, que ce message soit destiné audit dispositif noeud 134 ou pas. L'instant de réception du dernier message capté en date, en provenance dudit autre dispositif noeud, est également mémorisé. Quand cet instant de réception est plus ancien qu'un seuil prédéfini de non-activité, ledit autre dispositif noeud n'est plus considéré comme un voisin du dispositif noeud 134 et est donc supprimé de la table des voisins.

Dans une étape 303 suivante, le dispositif noeud 134 détermine la valeur du seuil TH, à appliquer par le dispositif noeud 134 dans le cadre d'un processus de décision de relayer ou pas des copies de requêtes de découverte de route que le dispositif noeud 134 peut être amené à recevoir ultérieurement. Ce processus de décision est détaillé ci-après en relation avec la Fig. 4. La valeur du seuil TH pour le dispositif noeud 134 est déterminée en fonction du nombre de dispositifs noeuds présents dans le voisinage réseau du dispositif noeud 134 qui a été déterminé à l'étape 302. Plus particulièrement, la valeur du seuil TH est telle que : en considérant une quantité X de dispositifs noeuds qui seraient présents dans le voisinage réseau du dispositif noeud 134 qui est supérieure à une quantité Y de dispositifs noeuds qui seraient présents dans le voisinage réseau du dispositif noeud 134 (X > Y), la valeur du seuil TH pour ladite quantité X est au moins aussi élevée que la valeur du seuil TH pour ladite quantité Y (TH(X) ≥ TH(Y)). La valeur du seuil TH pour le dispositif noeud 134 est ainsi dynamiquement modifiée en fonction de l'évolution du voisinage réseau dudit dispositif noeud 134.

Dans un mode de réalisation particulier, la valeur $V$ du seuil TH pour le dispositif noeud 134 est déterminée de la façon suivante :

$$V = L * N$$

où :

- $L$ est un coefficient multiplicateur positif non nul prédéfini ; et
- $N$ est le nombre de dispositifs noeuds présents dans le voisinage réseau du dispositif noeud 134.

Dans un autre mode de réalisation particulier adapté à la technologie G3-PLC, la valeur $V$ du seuil TH pour le dispositif noeud 134 est déterminée de la façon suivante :

$$V = K * {}^{n}\!/\!NT_{size}$$

où :

- $K$ est un coefficient multiplicateur positif non nul prédéfini ;
- $n$ représente le nombre d'entrées de la table des voisins dudit dispositif noeud 134 qui ont été rafraichies plus récemment qu'un délai Recent_Activity_Time prédéfini ; et
- $NT_{size}$ représente la taille totale de la table des voisins dudit dispositif noeud 134.

Le délai Recent_Activity_Time est plus court que la durée de vie des entrées de la table des voisins dudit dispositif noeud 134. Le délai Recent_Activity_Time est choisi de sorte que $n$ représente les dispositifs noeuds en provenance desquels ledit dispositif noeud 134 a reçu des signaux suffisamment récemment pour les considérer comme des dispositifs noeuds voisins actifs dans l'environnement dudit dispositif noeud 134.

Les valeurs des coefficients $K$ et $L$ sont adaptées en fonction de la métrique de coût de route choisie dans le réseau de communication 120, du paramétrage éventuel de ladite métrique et de la dynamique de valeurs de coûts que ladite métrique génère.

Le délai Recent_Activity_Time est par exemple de quelques heures dans un mode de réalisation particulier adapté à la technologie G3-PLC.

L'algorithme de la Fig. 3 est réitéré à chaque changement de topologie pouvant avoir un impact sur le nombre de dispositifs noeuds présents dans le voisinage réseau dudit dispositif noeud 134.

Ainsi, grâce à l'utilisation dudit seuil TH, une copie de la requête de découverte de route est relayée par diffusion que si ladite copie apporte une amélioration de coût jugée suffisamment significative. Plus le voisinage réseau du dispositif noeud 134 comporte un grand nombre de dispositifs noeuds, plus la probabilité qu'il existe des routes alternatives ayant des coûts de route proches, c'est-à-dire ayant des performances relativement similaires, est élevée. Il n'est alors pas nécessaire de relayer par diffusion toutes les copies de la requête de découverte de route qui pourraient être reçues par le dispositif noeud 134, ce qui entraîne que la route optimale depuis le dispositif noeud source et le dispositif noeud destination puisse ne pas être découverte. Un compromis entre performances des routes découvertes au final et nombre de diffusions nécessaires pour découvrir des routes adéquates est alors préféré, afin de limiter la consommation de bande passante pour ce faire et/ou, lorsque le réseau de communication 120 ne dispose pas de mécanisme d'évitement de collision, de limiter le risque de collision de signaux.

La **Fig. 4** illustre schématiquement un algorithme, exécuté par chaque dispositif noeud du réseau de communication 120 (qui n'est pas le dispositif noeud source ni le dispositif noeud destination dans le cadre d'une découverte de route), pour décider de relayer ou non des copies de requêtes de découverte de route entre dispositifs noeuds du réseau de communication 120. Considérons à titre illustratif que l'algorithme de la Fig. 4 est mis en oeuvre par le dispositif noeud 134.

Dans une étape 401, le dispositif noeud 134 reçoit un message correspondant à une requête de découverte de route (donc reçue directement du dispositif noeud source) ou à une copie d'une requête de découverte de route (donc reçue par l'intermédiaire d'au moins un dispositif noeud agissant comme relais).

Lorsque le message reçu à l'étape 401 est la requête de découverte de route, ledit message inclut une identification du dispositif noeud source et une identification du dispositif noeud destination, et potentiellement une information de coût de route (le dispositif noeud source pourrait transmettre la requête de découverte de route au dispositif noeud 134 par une interface du réseau de communication 120 et transmettre ladite requête de découverte de route à un autre dispositif noeud de son voisinage réseau par une autre interface du réseau de communication 120, il se pourrait que ces interfaces soient associées à des coûts de route distincts, et il se pourrait donc que le dispositif noeud 134 reçoive une copie de la requête de découverte de route qui fasse preuve d'un meilleur coût de route que la requête de découverte de route). Ledit message peut en outre inclure une information représentative de l'instant auquel la requête de découverte de route a été diffusée par le dispositif noeud source.

Lorsque le message reçu à l'étape 401 est une copie de la requête de découverte de route, ledit message inclut une identification du dispositif noeud source et une identification du dispositif noeud destination, et nécessairement une information de coût de route. Le message peut en outre inclure une information représentative du trajet suivi par ledit message pour parvenir audit dispositif noeud 134 depuis le dispositif noeud source (identification du dispositif noeud ayant joué le rôle de relais pour ladite copie de la requête de découverte de route ou des dispositifs noeuds ayant successivement joué le rôle de relais pour ladite copie de la requête de découverte de route). Ledit message peut en outre inclure une information représentative de l'instant auquel la requête de découverte de route a été initialement diffusée par le dispositif noeud source.

Dans une étape 402 suivante, le dispositif noeud 134 détermine si le message est la requête de découverte de route ou une copie de la requête de découverte de route. Si le message est une copie de la requête de découverte de route, une étape 403 est effectuée ; sinon, une étape 405 est effectuée.

Dans l'étape 403, le dispositif noeud 134 décide de relayer ou pas la copie, reçue à l'étape 401, de la requête de découverte de route. Le dispositif noeud 134 s'appuie sur des critères dont au moins un est une amélioration de coût de route supérieure au seuil TH d'amélioration de coût de route. Soit le seuil TH est fixe pour le dispositif noeud 134, soit le seuil TH est dynamiquement défini par le dispositif noeud 134 selon l'algorithme de la Fig. 3. Au moins un dispositif noeud du réseau de communication implémente un seuil TH défini dynamiquement. Préférentiellement, tous les dispositifs noeuds du réseau de communication 120 implémentent des seuils TH respectifs définis dynamiquement. Ainsi, le dispositif noeud 134 décide de relayer la copie, reçue à l'étape 401, de la requête de découverte de route lorsque la relation suivante est respectée :

$$C_{mess} - C_{rec} > V$$

où :

- $C_{mess}$ est la valeur du coût de route de la copie, reçue à l'étape 401, de la requête de découverte de route ;
- $C_{rec}$ est la meilleure valeur de coût de route parmi les messages qui ont été reçus par ledit dispositif noeud 134 et qui ont été relayés par ledit dispositif noeud 134 (pour la découverte de route en question) ; et
- $V$ est la valeur du seuil TH pour ledit dispositif noeud 134.

En d'autres termes, le dispositif noeud 134 décide de relayer la copie, reçue à l'étape 401, de la requête de découverte de route lorsque la différence entre le coût de route associé à toute autre copie de ladite requête de découverte de route précédemment reçue par ledit dispositif noeud 134 et le coût de route associé à ladite copie, reçue à l'étape 401, de la requête de découverte de route est supérieure à la valeur $V$ du seuil TH d'amélioration de coût de route.

Ainsi, le dispositif noeud 134 décide de relayer la copie, reçue à l'étape 401, de la requête de découverte de route si ladite copie est associée un coût de route pour parvenir audit dispositif noeud 134 qui apporte une amélioration considérée suffisamment significative du coût de route par rapport aux messages qui ont précédemment reçus par ledit dispositif noeud 134 (pour la découverte de route en question).

Le dispositif noeud 134 peut en outre s'appuyer sur d'autres critères pour décider de relayer ou pas la copie, reçue à l'étape 401, de la requête de découverte de route. Selon un premier exemple, le dispositif noeud 134 peut accepter de relayer ladite copie si le trajet par lequel ladite copie est parvenue au dispositif noeud 134 comporte un nombre de liens inter-dispositifs noeuds jugés de faible performance qui soit inférieur à un seuil prédéfini. Selon un second exemple, le dispositif noeud 134 peut considérer de relayer ladite copie si le trajet par lequel ladite copie est parvenue au dispositif noeud 134 comporte un nombre de sauts (« hops » en anglais) inférieur à un seuil prédéfini. Selon un troisième exemple, le dispositif noeud 134 peut considérer de relayer ladite copie si ladite copie a été initialement diffusée par le dispositif noeud source depuis un temps inférieur à un seuil prédéfini (péremption de ladite copie - temps de transit jugé trop long).

Dans une étape 404 suivante, le dispositif noeud 134 détermine si le dispositif noeud 134 doit relayer ou non la copie, reçue à l'étape 401, de la requête de découverte de route. Si le dispositif noeud 134 doit relayer la copie de la requête de découverte de route, l'étape 405 est effectuée ; sinon une étape 408 est effectuée.

Dans l'étape 405, le dispositif noeud 134 enregistre, grâce notamment au contenu du message reçu à l'étape 401, des informations concernant la découverte de route à laquelle se réfère ledit message.

Lorsque le message reçu à l'étape 401 est la requête de découverte de route (telle que transmise par le dispositif noeud source), ces informations peuvent être : l'identification du dispositif noeud source et l'identification du dispositif noeud destination, et une information indiquant que le dispositif noeud 134 a obtenu lesdites informations directement de ladite requête de découverte de route (donc directement du dispositif noeud source) et/ou une information de coût de route pour que ladite requête de découverte de route soit transmise depuis le dispositif noeud source jusqu'au dispositif noeud 134.

Lorsque le message reçu à l'étape 401 est une copie de la requête de découverte de route (telle que relayée par l'intermédiaire d'au moins un dispositif noeud depuis le dispositif noeud source), ces informations peuvent être : l'identification du dispositif noeud source, l'identification du dispositif noeud destination, et une information de coût de route pour que ladite copie de la requête de découverte de route parvienne du dispositif noeud source jusqu'au dispositif noeud 134. Ces informations peuvent en outre inclure une information identifiant le dispositif noeud ayant joué le rôle de relais pour ladite copie de la requête de découverte de route ou les dispositifs noeuds ayant successivement joué le rôle de relais pour ladite copie de la requête de découverte de route.

L'implémentation de l'étape 405 permet au dispositif noeud 134 d'enregistrer une trace de la meilleure valeur de coût de route parmi les messages qui ont été reçus par ledit dispositif noeud 134 et qui ont été relayés par ledit dispositif noeud 134 (pour la découverte de route en question).

Dans une étape 406 suivante, le dispositif noeud 134 prépare une copie à diffuser de la requête de découverte de route, à partir du message reçu à l'étape 401. La copie à diffuser de la requête de découverte de route inclut une identification du dispositif noeud source et une identification du dispositif noeud destination, et une information de coût de route. Cette information de coût de route reprend l'information de coût de route qui était incluse dans le message reçu à l'étape 401 modifiée pour prendre en compte le coût de route induit par le dispositif noeud 134 dans son rôle de relais. La copie à diffuser de la requête de découverte de route peut inclure en outre une information représentative du trajet qu'aura suivi ladite copie pour parvenir à chaque dispositif noeud du voisinage dudit dispositif noeud 134 (dès que ledit dispositif noeud 134 aura diffusé ladite copie). Le dispositif noeud 134 place ladite copie à diffuser, ainsi préparée, dans une file d'attente de la couche MAC (« Médium Access Control » en anglais) dudit dispositif noeud 134.

Dans un mode de réalisation particulier, le dispositif noeuds 134 peut enregistrer une information représentative de l'instant auquel ladite copie à diffuser de la requête de découverte de route a été préparée par le dispositif noeud 134. Cela permet de connaître ultérieurement, à chaque instant, depuis combien de temps ladite copie à diffuser, préparée par le dispositif noeud 134 mais non encore transmise, est en attente de diffusion, dans la couche MAC du dispositif noeud 134.

Dans une étape 407 suivante, dans le cas où ladite copie à diffuser qui a été placée en file d'attente de la couche MAC dudit dispositif noeud 134 n'a pas été purgée (voir ci-après la description des modes de réalisation dans lesquels une telle purge est effectuée), le dispositif noeud 134 diffuse ladite copie dans son voisinage réseau au moment où une telle diffusion est autorisée et rendue possible en vertu de règles prédéfinies de gestion de la couche MAC. Puis, l'étape 408 est effectuée.

Dans l'étape 408, le dispositif noeud 134 met fin au traitement du message reçu à l'étape 401.

Ainsi, grâce à l'implémentation de l'algorithme de la Fig. 4 par chaque dispositif noeud du réseau de communication 120, il est possible de découvrir au moins une route significative entre chaque dispositif noeud et n'importe quel autre dispositif noeud, et plus probablement une pluralité de routes significatives entre ces deux dispositifs noeuds. La définition du seuil TH permet de réduire la quantité de diffusions des diverses copies de chaque requête de découverte de route, ce qui signifie une réduction de consommation de bande passante et, lorsque le réseau de communication 120 ne dispose pas de mécanisme d'évitement de collision, une réduction de risque de collision de signaux.

Dans un mode de réalisation particulier, de manière à réduire encore la consommation de bande passante et, lorsque le réseau de communication 120 ne dispose pas de mécanisme d'évitement de collision, à réduire encore le risque de collision de signaux, le dispositif noeud 134 implémente un premier mécanisme de purge des copies de requête de découverte de route qui ont été préparées par ledit dispositif noeud 134 et qui sont en attente de diffusion, dans une file d'attente de la couche MAC dudit dispositif noeud 134. Pour ce faire, le dispositif noeud 134 décide de supprimer de la file d'attente de la couche MAC dudit dispositif noeud 134 toute copie de requête de découverte de route qui a été préparée depuis un temps supérieur à un seuil prédéfini (péremption de ladite copie - temps d'attente de diffusion jugé trop long).

Dans un mode de réalisation particulier, de manière à réduire encore la consommation de bande passante et, lorsque le réseau de communication 120 ne dispose pas de mécanisme d'évitement de collision, à réduire encore le risque de collision de signaux, le dispositif noeud 134 implémente un second mécanisme de purge des copies de requête de découverte de route qui ont été préparées par ledit dispositif noeud 134 et qui sont en attente de diffusion, dans une file d'attente de la couche MAC dudit dispositif noeud 134. Ce second mécanisme de purge est tel que, lorsque le dispositif noeud 134 décide de relayer une copie d'une requête de découverte de route, le dispositif noeud 134 vérifie s'il y a une autre copie de la requête de découverte de route en attente de diffusion en file d'attente de la couche MAC dudit dispositif noeud 134. Si tel est le cas, le dispositif noeud 134 supprime cette autre copie de la requête de découverte de route qui se trouve en file d'attente de la couche MAC dudit dispositif noeud 134. Cela évite de diffuser une copie de la requête de découverte de route qui serait associée à un moins bon coût de route que le coût de route de la copie que le dispositif noeud 134 vient de préparer.

Comme déjà indiqué, lorsqu'une copie de la requête de découverte de route parvient à un dispositif noeud, ladite copie peut inclure une information représentative du trajet qu'a suivi ladite copie pour parvenir audit dispositif noeud. Cela permet au dispositif noeud destination de connaître quelle route a été suivie par la copie de la requête de découverte de route présentant le meilleur coût de route parmi les copies de ladite requête de découverte de route qui ont été reçues par le dispositif noeud destination. Le dispositif noeud destination peut alors en informer le dispositif noeud source. Une autre approche consiste à ce que cette information représentative du trajet suivi ne soit pas incluse dans les copies de ladite requête de découverte de route, ce qui implique qu'aucun dispositif noeud ne connait le trajet suivi dans son entièreté. L'information de trajet suivi est alors répartie entre les dispositifs noeuds formant ledit trajet. Le choix de la meilleure route se fait par la mémorisation (à durée limitée), par chaque dispositif noeud décidant de relayer une requête de découverte de route ou une copie de la requête de découverte de route, du dispositif noeud en provenance duquel ledit dispositif noeud a (directement) reçu ladite requête de découverte de route ou ladite copie de la requête de découverte de route. Chaque dispositif noeud sur la route à activer depuis le dispositif noeud source jusqu'au dispositif noeud destination est alors en mesure de connaître quel autre dispositif noeud est immédiatement situé en amont sur ladite route. Le dispositif noeud destination peut donc émettre une réponse à la requête de découverte de route, qui est alors relayée de proche en proche en suivant le trajet inverse de celui de la copie de la requête de découverte de route qui présentait le meilleur coût de route parmi les copies de ladite requête de découverte de route qui ont été reçues par le dispositif noeud destination. Les dispositifs noeuds sur le trajet de cette réponse peuvent alors valider, sur réception de ladite réponse, la route à utiliser pour transmettre des données depuis le dispositif noeud source jusqu'au dispositif noeud destination.

## Revendications

1. Procédé pour décider de relayer par diffusion (408) une copie d'une requête de découverte de route afin de découvrir au moins une route depuis un dispositif noeud source (133) jusqu'à un dispositif noeud destination (136) dans un réseau de communication (120) comportant d'autres dispositifs noeuds (130, 131, 132, 134, 135, 137, 138, 139) pouvant agir comme relais entre le dispositif noeud source et le dispositif noeud destination, le procédé étant implémenté par au moins un dispositif noeud (134) parmi lesdits autres dispositifs noeuds,

dans lequel, sur réception (401) de la copie de la requête de découverte de route, ledit dispositif noeud (134) décide (403) de relayer par diffusion ladite copie si la différence entre un coût de route associé à toute autre copie de ladite requête de découverte de route précédemment reçue par ledit dispositif noeud et un coût de route associé à ladite copie est supérieure à une valeur de seuil d'amélioration de coût de route, **caractérisé en ce que** le dispositif noeud détermine (302), sur détection (301) d'un changement de topologie, le voisinage réseau dudit dispositif noeud qui résulte du changement de topologie détecté,

dans lequel

ledit dispositif noeud (134) définit dynamiquement (303) la valeur dudit seuil d'amélioration de coût de route en fonction de la quantité de dispositifs noeuds présents dans le voisinage réseau qui résulte du changement de topologie détecté, la valeur dudit seuil d'amélioration de coût de route étant ainsi dynamiquement définie en fonction de l'évolution dudit voisinage réseau de telle sorte que, en considérant une quantité X de dispositifs noeuds qui seraient présents dans le voisinage réseau dudit dispositif noeud qui est supérieure à une quantité Y de dispositifs noeuds qui seraient dans d'autres circonstances présents dans le voisinage réseau dudit dispositif noeud, la valeur dudit seuil pour ladite quantité X est au moins aussi élevée que la valeur dudit seuil pour ladite quantité Y.

**2.** Procédé selon la revendication 1, dans lequel ledit dispositif noeud (134) définit dynamiquement (303) la valeur dudit seuil d'amélioration de coût de route de la manière suivante :

$$V = K * \frac{n}{NT_{size}}$$

où :

- *K* est un coefficient multiplicateur positif non nul prédéfini ;
- *n* représente un nombre d'entrées d'une table des voisins dudit dispositif noeud qui ont été rafraichies plus récemment qu'un délai prédéfini ; et
- *NT_{size}* représente la taille totale de la table des voisins dudit dispositif noeud.

**3.** Procédé selon l'une quelconque des revendications 1 et 2, dans lequel, sur décision de relayer par diffusion ladite copie, ledit dispositif noeud effectue les étapes suivantes :

- préparer (406) une copie à diffuser de la requête de découverte de route ;
- enregistrer une information représentative de l'instant auquel ladite copie à diffuser a été préparée par le dispositif noeud ; et
- placer ladite copie à diffuser en file d'attente en couche MAC dudit dispositif noeud ;

et en ce que ledit dispositif noeud (134) supprime de la file d'attente de la couche MAC dudit dispositif noeud toute copie de requête de découverte de route qui a été préparée depuis un temps supérieur à un seuil prédéfini.

**4.** Procédé selon l'une quelconque des revendications 1 à 3, dans lequel, sur décision de relayer par diffusion ladite copie, ledit dispositif noeud (134) effectue les étapes suivantes :

- préparer (406) une copie à diffuser de la requête de découverte de route ; et
- placer ladite copie à diffuser en file d'attente en couche MAC dudit dispositif noeud ;

et en ce que, avant de placer ladite copie à diffuser en file d'attente en couche MAC dudit dispositif noeud, ledit dispositif noeud (134) vérifie s'il y a une autre copie de la requête de découverte de route en attente de diffusion en file d'attente de la couche MAC dudit dispositif noeud, et si tel est le cas, ledit dispositif noeud (134) supprime cette autre copie de la requête de découverte de route qui se trouve en file d'attente de la couche MAC dudit dispositif noeud.

**5.** Procédé selon l'une quelconque des revendications 1 à 4, dans lequel le dispositif noeud (134) décide (403) de relayer effectivement par diffusion ladite copie de la requête de découverte de route si le trajet par lequel ladite copie est parvenue audit dispositif noeud comporte un nombre de liens inter-dispositifs noeuds jugés de faible performance qui soit inférieur à un seuil prédéfini.

**6.** Procédé selon l'une quelconque des revendications 1 à 5, dans lequel le dispositif noeud (134) décide (403) de relayer effectivement par diffusion ladite copie de la requête de découverte de route si le trajet par lequel ladite copie est parvenue au dispositif noeud comporte un nombre de sauts inférieur à un seuil prédéfini.

**7.** Procédé selon l'une quelconque des revendications 1 à 6, dans lequel ladite copie de la requête de découverte de route inclut une information représentative d'un instant auquel la requête de découverte de route a été initialement diffusée par le dispositif noeud source, et en ce que ledit dispositif noeud (134) décide (403) de relayer effectivement par diffusion ladite copie de la requête de découverte de route si ladite copie a été initialement diffusée par le dispositif noeud source depuis un temps inférieur à un seuil prédéfini.

**8.** Procédé selon l'une quelconque des revendications 1 à 7, dans lequel le réseau de communication (120) est un réseau de communication par courants porteurs en ligne qui est implémenté sur un réseau d'alimentation électrique, et les dispositifs noeuds (130, 131, 132, 133, 134, 135, 136, 137, 138, 139) du réseau de communication (120) sont des compteurs électriques intelligents en charge de relever des consommations énergétiques d'installations électriques respectives alimentées par ledit réseau d'alimentation électrique.

**9.** Programme d'ordinateur, **caractérisé en ce qu'**il comprend des instructions pour mettre en oeuvre, par un dispositif noeud, le procédé selon l'une quelconque des revendications 1 à 8, lorsque ledit programme est exécuté par un processeur dudit dispositif noeud.

**10.** Support de stockage d'informations, **caractérisé en ce qu'**il stocke un programme d'ordinateur comprenant des instructions pour mettre en oeuvre, par un dispositif noeud, le procédé selon l'une quelconque des revendications 1 à 8, lorsque ledit programme est exécuté par un processeur dudit dispositif noeud.

**11.** Dispositif noeud (134) configuré pour décider de relayer par diffusion (408) une copie d'une requête de découverte de route afin de découvrir au moins une route depuis un dispositif noeud source (133) jusqu'à un dispositif noeud destination (136) dans un réseau de communication (120) comportant d'autres dispositifs noeuds (130, 131, 132, 135, 137, 138, 139) pouvant agir comme relais entre le dispositif noeud source et le dispositif noeud destination,

dans lequel, sur réception (401) de la copie de la requête de découverte de route, ledit dispositif noeud (134) est configuré pour décider (403) de relayer par diffusion ladite copie si la différence entre un coût de route associé à toute autre copie de ladite requête de découverte de route précédemment reçue par ledit dispositif noeud et un coût de route associé à ladite copie est supérieure à une valeur de seuil d'amélioration de coût de route, **caractérisé en ce que** ledit dispositif noeud est configuré pour déterminer (302), sur détection (301) d'un changement de topologie, le voisinage réseau dudit dispositif noeud qui résulte du changement de topologie détecté, dans lequel ledit dispositif noeud (134) est configuré pour définir dynamiquement (303) la valeur dudit seuil d'amélioration de coût de route en fonction d'une quantité de dispositifs noeuds présents dans le voisinage réseau qui résulte du changement de topologie détecté, la valeur dudit seuil d'amélioration de coût de route étant ainsi dynamiquement définie en fonction de l'évolution dudit voisinage réseau de telle sorte que, en considérant une quantité X de dispositifs noeuds qui seraient présents dans le voisinage réseau dudit dispositif noeud qui est supérieure à une quantité Y de dispositifs noeuds qui seraient dans d'autres circonstances présents dans le voisinage réseau dudit dispositif noeud, la valeur dudit seuil pour ladite quantité X est au moins aussi élevée que la valeur dudit seuil pour ladite quantité Y.

**Patentansprüche**

**1.** Verfahren zum Entscheiden über das Weiterleiten, durch Rundsenden (408), einer Kopie einer Routenermittlungsanfrage, um wenigstens eine Route von einer Quellknotenvorrichtung (133) zu einer Zielknotenvorrichtung (136) in einem Kommunikationsnetz (120) zu ermitteln, das weitere Knotenvorrichtungen (130, 131, 132, 134, 135, 137, 138, 139) aufweist, die als Relais zwischen der Quellknotenvorrichtung und der Zielknotenvorrichtung agieren können, wobei das Verfahren von wenigstens einer Knotenvorrichtung (134) von den weiteren Knotenvorrichtungen implementiert wird,

wobei die Knotenvorrichtung (134) bei Empfang (401) der Kopie der Routenermittlungsanfrage entscheidet (403), die Kopie durch Rundsenden weiterzuleiten, falls die Differenz zwischen Routenkosten, die einer beliebigen anderen, zuvor durch diese Knotenvorrichtung empfangenen Kopie der Routenermittlungsanfrage zugeordnet sind, und Routenkosten, die der Kopie zugeordnet sind, stets größer als ein Schwellenwert der Verringerung der Routenkosten ist,

**dadurch gekennzeichnet, dass** die Knotenvorrichtung bei Erkennung (301) einer Topologieänderung die Netzumgebung der Knotenvorrichtung bestimmt (302), welche aus der erkannten Topologieänderung resultiert,

wobei die Knotenvorrichtung (134) den Wert des Schwellenwertes der Verringerung der Routenkosten in Abhängigkeit von der Anzahl von Knotenvorrichtungen dynamisch definiert (303), die in der Netzumgebung vorhanden sind, welche aus der erkannten Topologieänderung resultiert, wobei der Schwellenwert der Verringerung der Routenkosten somit dynamisch in Abhängigkeit von der Entwicklung der Netzumgebung definiert wird, derart, dass, wenn man eine Anzahl X von Knotenvorrichtungen betrachtet, die in der Netzumgebung der Knotenvorrichtung vorhanden sind, welche größer als eine Anzahl Y von Knotenvorrichtungen ist, die unter anderen Umständen in der Netzumgebung der Knotenvorrichtung vorhanden sind, der Wert des Schwellenwertes für die Anzahl X mindestens ebenso hoch wie der Wert des Schwellenwertes für die Anzahl Y ist.

**2.** Verfahren nach Anspruch 1, wobei die Knotenvorrichtung (134) den Wert des Schwellenwertes der Verringerung der Routenkosten auf folgende Weise dynamisch definiert (303):

$$V = K * {}^{n}\!/\!NT_{size}$$

wobei:

- $K$ ein vordefinierter, von null verschiedener, positiver Multiplikationsfaktor ist;
- $n$ eine Anzahl von Einträgen einer Tabelle der Nachbarn der Knotenvorrichtung bezeichnet, welche vor einer Zeit aktualisiert wurden, die kürzer als eine vordefinierte Zeitspanne ist; und
- $NT_{size}$ die Gesamtgröße der Tabelle der Nachbarn der Knotenvorrichtung bezeichnet.

**3.** Verfahren nach einem der Ansprüche 1 und 2, wobei nach einer Entscheidung, die Kopie durch Rundsenden weiterzuleiten, die Knotenvorrichtung die folgenden Schritte ausführt:

- Herstellen (406) einer rundzusendenden Kopie der Routenermittlungsanfrage;
- Aufzeichnen einer Information, die für den Zeitpunkt, zu dem die rundzusendende Kopie hergestellt worden ist, repräsentativ ist, durch die Knotenvorrichtung; und
- Einreihen der rundzusendenden Kopie in eine Warteschlange in der MAC-Schicht der Knotenvorrichtung;

und dadurch, dass die Knotenvorrichtung (134) aus der Warteschlange der MAC-Schicht der Knotenvorrichtung jede Kopie einer Routenermittlungsanfrage löscht, welche vor einer Zeit hergestellt worden ist, die länger als ein vordefinierter Schwellenwert ist.

4. Verfahren nach einem der Ansprüche 1 bis 3, wobei nach einer Entscheidung, die Kopie durch Rundsenden weiterzuleiten, die Knotenvorrichtung (134) die folgenden Schritte ausführt:

- Herstellen (406) einer rundzusendenden Kopie der Routenermittlungsanfrage; und
- Einreihen der rundzusendenden Kopie in eine Warteschlange in der MAC-Schicht der Knotenvorrichtung;

und dadurch, dass vor dem Einreihen der rundzusendenden Kopie in eine Warteschlange in der MAC-Schicht der Knotenvorrichtung die Knotenvorrichtung (134) überprüft, ob eine weitere Kopie der Routenermittlungsanfrage, die auf das Rundsenden wartet, in der Warteschlange der MAC-Schicht der Knotenvorrichtung vorhanden ist, und wenn dies der Fall ist, die Knotenvorrichtung (134) diese weitere Kopie der Routenermittlungsanfrage, welche sich in der Warteschlange der MAC-Schicht der Knotenvorrichtung befindet, löscht.

5. Verfahren nach einem der Ansprüche 1 bis 4, wobei die Knotenvorrichtung (134) entscheidet (403), die Kopie der Routenermittlungsanfrage tatsächlich durch Rundsenden weiterzuleiten, falls der Weg, über den die Kopie zu der Knotenvorrichtung gelangt ist, eine Anzahl von Verbindungen zwischen Knotenvorrichtungen, die als Verbindungen mit niedriger Leistung angesehen werden, aufweist, welche kleiner als ein vordefinierter Schwellenwert ist.

6. Verfahren nach einem der Ansprüche 1 bis 5, wobei die Knotenvorrichtung (134) entscheidet (403), die Kopie der Routenermittlungsanfrage tatsächlich durch Rundsenden weiterzuleiten, falls der Weg, über den die Kopie zu der Knotenvorrichtung gelangt ist, eine Anzahl von Hops aufweist, die kleiner als ein vordefinierter Schwellenwert ist.

7. Verfahren nach einem der Ansprüche 1 bis 6, wobei die Kopie der Routenermittlungsanfrage eine Information enthält, die für einen Zeitpunkt repräsentativ ist, zu dem die Routenermittlungsanfrage ursprünglich von der Quellknotenvorrichtung rundgesendet wurde, und dadurch, dass die Knotenvorrichtung (134) entscheidet (403), die Kopie der Routenermittlungsanfrage tatsächlich durch Rundsenden weiterzuleiten, falls die Kopie ursprünglich von der Quellknotenvorrichtung vor einer Zeit rundgesendet wurde, die kürzer als ein vordefinierter Schwellenwert ist.

8. Verfahren nach einem der Ansprüche 1 bis 7, wobei das Kommunikationsnetz (120) ein Netz zur Kommunikation über Stromleitungen ist, welches auf einem Stromversorgungsnetz implementiert ist, und die Knotenvorrichtungen (130, 131, 132, 133, 134, 135, 136, 137, 138, 139) des Kommunikationsnetzes (120) intelligente Stromzähler sind, welche die Aufgabe haben, Energieverbrauchswerte jeweiliger elektrischer Anlagen zu ermitteln, die aus dem Stromversorgungsnetz gespeist werden.

9. Computerprogramm, **dadurch gekennzeichnet, dass** es Anweisungen zur Durchführung, durch eine Knotenvorrichtung, des Verfahrens nach einem der Ansprüche 1 bis 8, wenn das Programm von einem Prozessor der Knotenvorrichtung ausgeführt wird, umfasst.

10. Informationsspeichermedium, **dadurch gekennzeichnet, dass** auf ihm ein Computerprogramm gespeichert ist, welches Anweisungen zur Durchführung, durch eine Knotenvorrichtung, des Verfahrens nach einem der Ansprüche 1 bis 8, wenn das Programm von einem Prozessor der Knotenvorrichtung ausgeführt wird, umfasst.

11. Knotenvorrichtung (134), welche dafür ausgelegt ist, über das Weiterleiten, durch Rundsenden (408), einer Kopie einer Routenermittlungsanfrage zu entscheiden, um wenigstens eine Route von einer Quellknotenvorrichtung (133) zu einer Zielknotenvorrichtung (136) in einem Kommunikationsnetz (120) zu ermitteln, das weitere Knotenvorrichtungen (130, 131, 132, 135, 137, 138, 139) aufweist, die als Relais zwischen der Quellknotenvorrichtung und der Zielknotenvorrichtung agieren können,
wobei die Knotenvorrichtung (134) bei Empfang (401) der Kopie der Routenermittlungsanfrage dafür ausgelegt zu entscheiden (403), die Kopie durch Rundsenden weiterzuleiten, falls die Differenz zwischen Routenkosten, die einer beliebigen anderen, zuvor durch diese Knotenvorrichtung empfangenen Kopie der Routenermittlungsanfrage zugeordnet sind, und Routenkosten, die der Kopie zugeordnet sind, stets größer als ein Schwellenwert der Verringerung der Routenkosten ist,

**dadurch gekennzeichnet, dass** die Knotenvorrichtung dafür ausgelegt ist, bei Erkennung (301) einer Topologieänderung die Netzumgebung der Knotenvorrichtung zu bestimmen (302), welche aus der erkannten Topologieänderung resultiert,

wobei die Knotenvorrichtung (134) dafür ausgelegt ist, den Wert des Schwellenwertes der Verringerung der Routenkosten in Abhängigkeit von einer Anzahl von Knotenvorrichtungen, die in der Netzumgebung vorhanden sind, welche aus der erkannten Topologieänderung resultiert, dynamisch zu definieren (303),

wobei der Wert des Schwellenwertes der Verringerung der Routenkosten somit dynamisch in Abhängigkeit von der Entwicklung der Netzumgebung definiert wird, derart, dass, wenn man eine Anzahl X von Knotenvorrichtungen betrachtet, die in der Netzumgebung der Knotenvorrichtung vorhanden sind, welche größer als eine Anzahl Y von Knotenvorrichtungen ist, die unter anderen Umständen in der Netzumgebung der Knotenvorrichtung vorhanden sind, der Wert des Schwellenwertes für die Anzahl X mindestens ebenso hoch wie der Wert des Schwellenwertes für die Anzahl Y ist.

**Claims**

1. Method for deciding to relay by broadcasting (408) a copy of a route discovery request so as to discover at least one route from a source node device (133) to a destination node device (136) in a communication network (120) comprising other node devices (130, 131, 132, 134, 135, 137, 138, 139) able to act as relay between the source node device and the destination node device, the method being implemented by at least one node device (134) from among the said other node devices,

in which, on receipt (401) of the copy of the route discovery request, the said node device (134) decides (403) to relay by broadcasting the said copy if the difference between a route cost associated with any other copy of the said route discovery request previously received by the said node device and a route cost associated with the said copy is greater than a route cost improvement threshold value, **characterized in that** the node device determines (302), on detection (301) of a change of topology, the network neighbourhood of the said node device which results from the detected change of topology, in which the said node device (134) defines dynamically (303) the value of the said route cost improvement threshold as a function of the quantity of node devices present in the network neighbourhood which results from the detected change of topology, the value of the said route cost improvement threshold thus being dynamically defined as a function of the evolution of the said network neighbourhood in such a way that, by considering a quantity X of node devices which would be present in the network neighbourhood of the said node device which is greater than a quantity Y of node devices which would in other circumstances be present in the network neighbourhood of the said node device, the value of the said threshold for the said quantity X is at least as high as the value of the said threshold for the said quantity Y.

2. Method according to Claim 1, in which the said node device (134) defines dynamically (303) the value of the said route cost improvement threshold in the following manner:

$$V = K * {}^n/NT_{size}$$

where:

- $K$ is a predefined non-zero positive multiplier coefficient;
- $n$ represents a number of inputs of a table of the neighbours of the said node device which have been refreshed more recently than a predefined timespan; and
- $NT_{size}$ represents the total size of the table of neighbours of the said node device.

3. Method according to either one of Claims 1 and 2, in which, on deciding to relay by broadcasting the said copy, the said node device performs the following steps:

- preparing (406) a copy to be broadcast of the route discovery request;
- recording an information item representative of the instant at which the said copy to be broadcast has been prepared by the node device; and
- placing the said copy to be broadcast in a queue in the MAC layer of the said node device;

and in that the said node device (134) deletes from the queue of the MAC layer of the said node device any copy of route discovery request which was prepared a time ago that is greater than a predefined threshold.

4. Method according to any one of Claims 1 to 3, in which, on deciding to relay by broadcasting the said copy, the said node device (134) performs the following steps:

- preparing (406) a copy to be broadcast of the route discovery request; and
- placing the said copy to be broadcast in a queue in the MAC layer of the said node device;

and in that, before placing the said copy to be broadcast in a queue in the MAC layer of the said node device, the said node device (134) verifies whether there is another copy of the route discovery request on standby awaiting broadcasting in a queue of the MAC layer of the said node device, and if such is the case, the said node device (134) deletes this other copy of the route discovery request which is in a queue of the MAC layer of the said node device.

5. Method according to any one of Claims 1 to 4, in which the node device (134) decides (403) to actually relay by broadcasting the said copy of the route discovery request if the path by which the said copy reached the said node device comprises a number which is less than a predefined threshold of internode device links that are deemed of low performance.

6. Method according to any one of Claims 1 to 5, in which the node device (134) decides (403) to actually relay by broadcasting the said copy of the route discovery request if the path by which the said copy reached the node device comprises a number of hops which is less than a predefined threshold.

7. Method according to any one of Claims 1 to 6, in which the said copy of the route discovery request includes an information item representative of an instant at which the route discovery request was initially broadcast by the source node device, and in that the said node device (134) decides (403) to actually relay by broadcasting the said copy of the route discovery request if the said copy was initially broadcast by the source node device a time ago which is less than a predefined threshold.

8. Method according to any one of Claims 1 to 7, in which the communication network (120) is a power line communication network based on carrier currents which is implemented on an electrical power supply network, and the node devices (130, 131, 132, 133, 134, 135, 136, 137, 138, 139) of the communication network (120) are smart electrical meters in charge of logging energy consumptions of respective electrical installations supplied by the said electrical power supply network.

9. Computer program, **characterized in that** it comprises instructions for implementing, by a node device, the method according to any one of Claims 1 to 8, when the said program is executed by a processor of the said node device.

10. Information storage medium, **characterized in that** it stores a computer program comprising instructions for implementing, by a node device, the method according to any one of Claims 1 to 8, when the said program is executed by a processor of the said node device.

11. Node device (134) configured to decide to relay by broadcasting (408) a copy of a route discovery request so as to discover at least one route from a source node device (133) to a destination node device (136) in a communication network (120) comprising other node devices (130, 131, 132, 135, 137, 138, 139) able to act as relay between the source node device and the destination node device,
in which, on receipt (401) of the copy of the route discovery request, the said node device (134) is configured to decide (403) to relay by broadcasting the said copy if the difference between a route cost associated with any other copy of the said route discovery request previously received by the said node device and a route cost associated with the said copy is greater than a route cost improvement threshold value,
**characterized in that** the said node device is configured to determine (302), on detection (301) of a change of topology, the network neighbourhood of the said node device which results from the detected change of topology,
in which the said node device (134) is configured to define dynamically (303) the value of the said route cost improvement threshold as a function of a quantity of node devices present in the network neighbourhood which results from the detected change of topology, the value of the said route cost improvement threshold thus being dynamically defined as a function of the evolution of the said network neighbourhood in such a way that, by considering a quantity X of node devices which would be present in the network neighbourhood of the said node device which is greater than a quantity Y of node devices which would in other circumstances be present in the network neighbourhood of the said node device, the value of the said threshold for the said quantity X is at least as high as the value of the said threshold for the said quantity Y.

Fig. 1

201
CPU

202
RAM

203
ROM

210

204

205

Fig. 2

301  Détection de changement de topologie

302  Détermination de voisinage réseau

303  Détermination d'une valeur de seuil TH d'amélioration de coût de route, en fonction d'une quantité de dispositifs nœuds présents dans un voisinage réseau

Fig. 3

401 — Réception d'une requête de découverte de route ou une copie de la requête de découverte de route

**non** — Copie ? — **oui**

402

403

Décision de relais de ladite requête en fonction de critères dont au moins un critère est une amélioration de coût de route supérieure audit seuil TH

405

**oui** — A relayer ? — **non**

Enregistrement

404

Préparation d'une copie de ladite requête — 406

Diffusion, de ladite copie — 407

408

Fin de traitement

Fig. 4

**EP 3 211 841 B1**

## RÉFÉRENCES CITÉES DANS LA DESCRIPTION

**Documents brevets cités dans la description**

- US 9008073 B1